# EUROPEAN PATENT APPLICATION

(11) **EP 2 228 301 A2**
(43) Date of publication of application: **15.09.2010**
(21) Application number: 10153548.2
(22) Date of filing: 12.02.2010
(51) Int. Cl.: B64C 39/02

(54) **Tether energy supply system**

(30) Priority: 10.03.2009 US 401523
(71) Applicant: Honeywell International Inc., Morristown, NJ 07962 (US)
(72) Inventor: O'Brien, Patrick, Morristown, NJ 07962-2245 (US); Goossen, Emray R., Morristown, NJ 07692-2245 (US); Martinez, Steven D., Morristown, NJ 07962-2245 (US)
(74) Representative: Buckley, Guy Julian

(57) **Abstract**

A tether continuous energy supply system for an unmanned aerial vehicle (12) comprises a ground station (14), a ground station energy system (16), a spool (18) coupled to the ground station energy system at a rotating joint, a tether that is wound (20) about the spool, wherein a first end (22) of the tether is coupled to the rotating joint, a tension control motor (24) coupled to both the spool and the ground station energy system, an unmanned aerial vehicle coupled to a second end of the tether, a UAV energy system (26), a fluid that moves throughout the tether continuous energy supply system, a tension control system (28) that receives and transmits signals from a plurality of sensors contained within the tether continuous energy supply system, and a distributed controls system that receives and transmits signals from the plurality of sensors contained within the tether continuous energy supply system.

## Description

### BACKGROUND

Remotely controlled aerial observational and broadcasting platforms and unmanned aerial vehicles (UAVs) are known to provide video and infrared observation and surveillance of persons, industrial equipment, and security environments. UAVs are sometimes used by military and governmental agencies to survey territories by air. However, fuel capacity limits flight time for conventional UAVs. In addition, carrying fuel onboard greatly increases the UAV's weight. UAVs that instead receive electrical power via a tether must carry onboard a voltage reducing transformer, again adding to the weight of the UAV. Also, the heat producing components on tethered electrically powered UAVs often require a cooling apparatus to prevent overheating, likewise adding to the weight of the UAV.

UAVs typically rely on wireless radio communication technologies for command, control, and data transmission. However, radio communications are susceptible to intentional and unintentional jamming, and can be easily compromised by persons of modest equipment desiring to intercept the information and data being broadcast. Radio communication also provides a limited bandwidth capacity for data transfer.

### SUMMARY

The discovery presented herein outlines a tether continuous energy supply system for an unmanned aerial vehicle (UAV) that has the surprising beneficial effects of (1) eliminating UAV weight associated either with fuel or with a voltage reducing transformer and a cooling apparatus, (2) eliminating the risk created by heat producing components, (3) providing controlled communications through a tether between the UAV and a ground station, and (4) eliminating disruptions in the UAV's flight path by providing optimized tension control at both ends of the tether.

In a first aspect, the present invention provides a tether continuous energy supply system for an unmanned aerial vehicle comprising: (a) a ground station, (b) a ground station energy system, (c) a spool coupled to the ground station energy system at a rotating joint, (d) a tether that is wound about the spool, wherein a first end of the tether is coupled to the rotating joint, (e) a tension control motor coupled to both the spool and the ground station energy system, (f) an unmanned aerial vehicle coupled to a second end of the tether, (g) a UAV energy system, (h) a fluid that moves throughout the tether continuous energy supply system, (i) a tension control system that receives and transmits signals from a plurality of sensors contained within the tether continuous energy supply system, and (j) a distributed controls system that receives and transmits signals from the plurality of sensors contained within the tether continuous energy supply system.

In a second aspect, the present invention provides a method for adjusting tether tension between an unmanned aerial vehicle and a ground station comprising the steps of: (a) measuring tether tension via at least one force measuring device coupled to a second end of a tether located at an unmanned aerial vehicle, (b) measuring tether tension via a force measuring device coupled to a friction reduction device located at an opening in a ground station from which the tether is deployed, (c) measuring the length of the tether unwound from a spool via a rotational sensor, (d) measuring the current of a tension control motor coupled to the spool, (e) sending data from each measurement to a tension control system, (f) processing data from each measurement in the tension control system to determine the proper adjustment for the tether tension, (g) transmitting the proper adjustment data from the tension control system to the tension control motor to adjust the tether tension, (h) adjusting the tether tension by driving the tension control motor to either wind or unwind the tether from the spool, (i) transmitting the proper adjustment data from the tension control system to the distributed controls system to modify the unmanned aerial vehicle's flight path to reduce or increase tether tension to a preset tension, and (j) modifying the unmanned aerial vehicle's flight path to reduce or increase tether tension to a preset tension.

In a third aspect, the present invention provides a method for continuously supplying energy to an unmanned aerial vehicle from a ground station via a tether comprising the steps of: (a) powering a ground station motor, (b) driving a ground station energy system via the ground station motor, (c) pumping a fluid through from the ground station energy system to a control valve, (d) pumping the fluid from the control valve to a rotating joint in a spool, wherein a tether is wound about the spool, wherein a first end of the tether is coupled to the rotating joint, (e) pumping the fluid through the tether to an unmanned aerial vehicle that receives a second end of the tether, (f) using the fluid to power a UAV energy system, and (g) purging the fluid or the fluid's byproducts from the unmanned aerial vehicle.

### BRIEF DESCRIPTION OF THE DRAWINGS

Figure 1 illustrates an example closed hydraulic tether continuous energy supply system.
Figure 2 illustrates an example open hydraulic tether continuous energy supply system.
Figure 3 illustrates an example open pneumatic tether continuous energy supply system.
Figure 4 illustrates an example open hydrogen tether continuous energy supply system.

### DETAILED DESCRIPTION

In a first aspect, the present invention provides a tether continuous energy supply system 10for an unmanned aerial vehicle 12comprising: (a) a ground station 14, (b) a ground station energy system 16, (c) a spool 18 coupled to the ground station energy system 16 at a rotating joint, (d) a tether 20 that is wound about the spool 18, wherein a first end 22 of the tether 20 is coupled to the rotating joint, (e) a tension control motor 24 coupled to both the spool 18 and the ground station energy system 16, (f) an unmanned aerial vehicle 12 coupled to a second end 23 of the tether 20, (g) a UAV energy system 26, (h) a fluid that moves throughout the tether continuous energy supply system 10, (i) a tension control system 28 that receives and transmits signals from a plurality of sensors contained within the tether continuous energy supply system 10, and (j) a distributed controls system 30 that receives and transmits signals from the plurality of sensors contained within the tether continuous energy supply system 10.

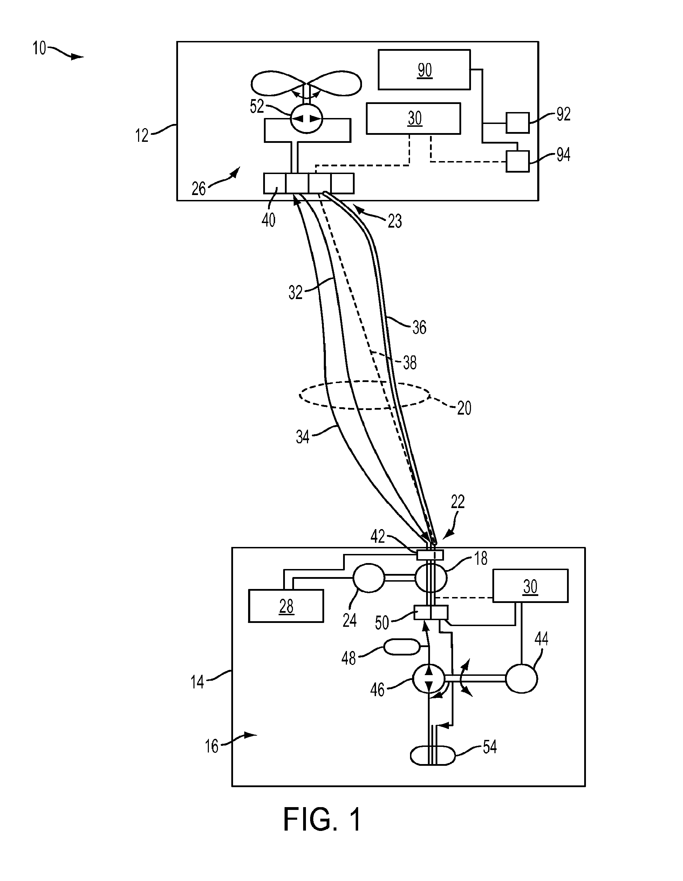

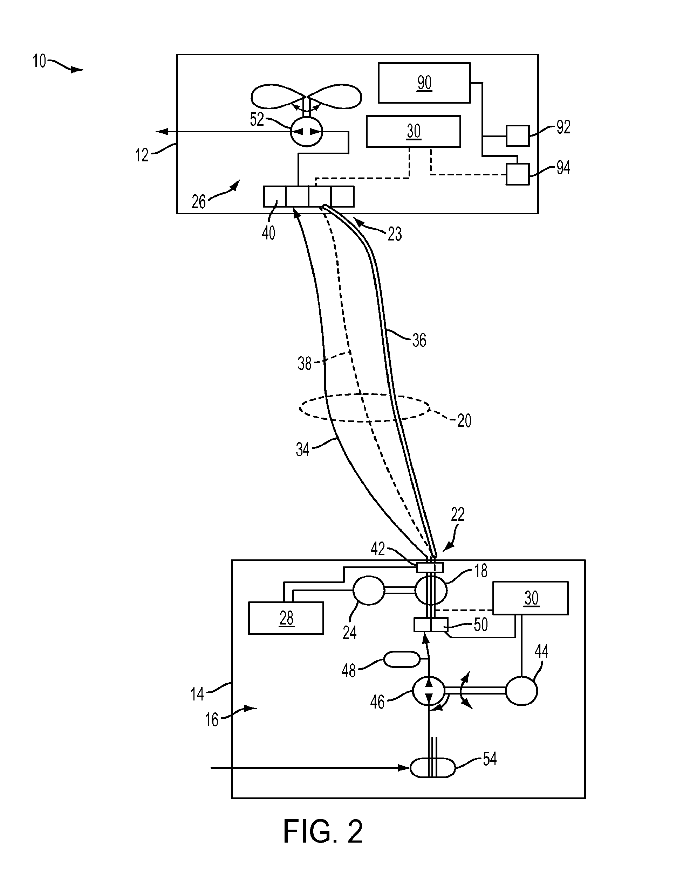

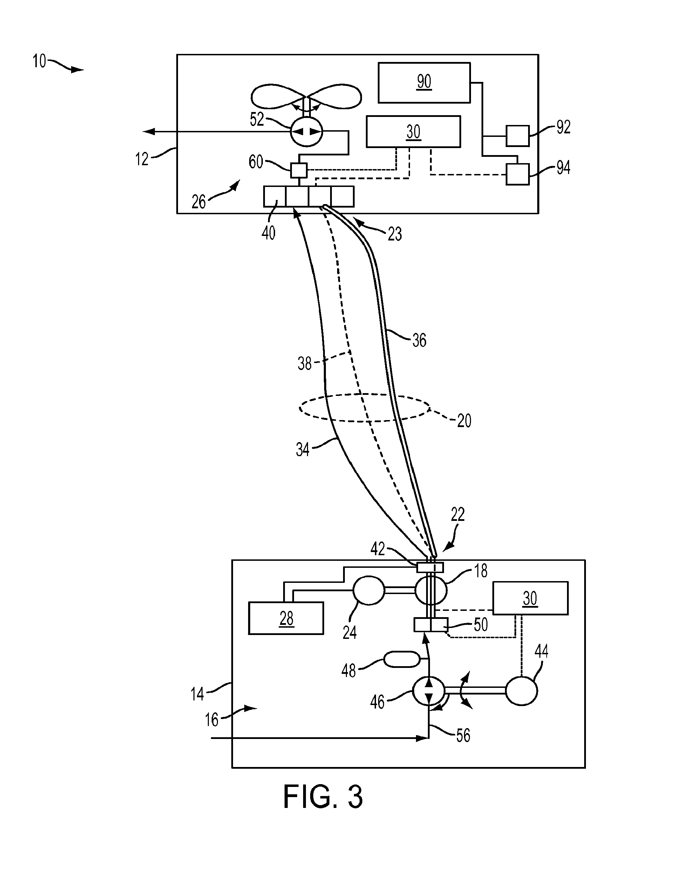

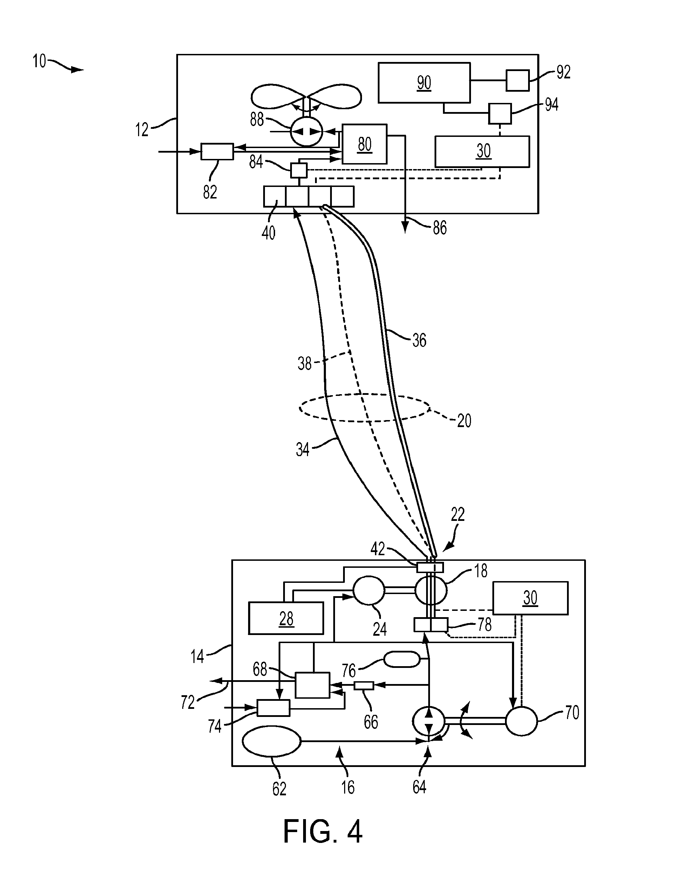

As used herein, a tether continuous energy supply system 10 may be an open or closed system and may operate using hydraulics (Figs. 1 and 2), pneumatics (Fig. 3), a hydrogen fuel supply (Fig. 4), or any other system capable of employing a fluid. As used herein, the term "fluid" refers to both working fluids and fuel. Open systems can be used when the fluid or fluid's byproducts are environmentally friendly. For example, a hydraulic system may employ water as a working fluid or a pneumatic system may employ air, which is then purged from the unmanned aerial vehicle 12 (UAV) into the environment. Similarly, the hydrogen system may purge fuel cell exhaust in the form of air and water into the surrounding environment. However, if a non-environmentally friendly fluid is used, the tether 20 can contain at least one return line 32 from the UAV 12 to the ground station 14 to purge the fluid from the UAV while preventing release of the fluid into the surrounding area.

As used herein, a ground station 14 may be permanently fixed to a foundation or may be transportable to different locations of interest. Alternatively, the ground station 14 may itself comprise a human operated vehicle or unmanned ground vehicle that drives to a desired UAV deployment location.

As used herein, the tether 20 is coupled to both the ground station 14 and the UAV 12. At the ground station 14 the first end 22 of the tether 20 is wound about a spool 18, which is coupled to a rotating joint. This rotating joint allows the tether 20 to wind and unwind from the spool 18. The second end 23 of the tether 20 may be connected to the UAV 12 via rotating joint or a spherical joint to prevent twisting due to UAV flight maneuvers. The exterior of the tether 20 is preferably made of an elastomer sheath or any other material with a stiffness that allows spooling without collapsing the supply line 34 or return line 32. The bend radius of the tether's exterior sheath should therefore be less than the radius of the spool 18.

In one embodiment, a portion of the second end 23 of the tether 20 is stiff enough to avoid being drawn into an air intake on the UAV 12. The length of this stiff portion is at least one and a half times the diameter of the UAV's fan. This stiff tether portion may also act as a landing guide where the ground station 14 contains a conical receptacle that receives the stiff portion and maintains the UAV 12 in a proper orientation for contact with the ground station 14.

In one embodiment, the tether 20 contains at least one tensile yarn 36 and at least one supply line 34. The tensile yarn 36 is preferably made of Spectra fiber but any other tensile yarn known in the art, for example carbon fiber, may be used. The number of tensile yarns 36 required will depend on the anticipated loads on the tether 20. At least one supply line 34 carries fluid from the ground station 14 to the UAV 12. The supply line 34 is composed of a material that will not collapse on itself during spooling, such as nylon or any other suitable material. This material must also be impermeable to the fluid it carries.

In one embodiment, the tether 20 may also contain a return line 32 that carries the fluid or system byproducts from the UAV 12 to the ground station 14. This return line 32 can be used, for example, when the fluid is not environmentally friendly. Like the supply line 34, the return line 32 must also be made of a material that will not collapse on itself during spooling, such as nylon or any other suitable material. Similarly, this material must also be impermeable to the fluid or byproducts that it carries.

In one embodiment, the tether 20 may also contain at least one communication cable 38. This communication cable 38 preferably comprises fiber optics, or any other medium known in the art. The communication cable 38 transmits signals from the plurality of sensors contained within the tether continuous energy supply system 10 to the tension control system 28. The communication cable 38 also transmits signals from the tension control system 28 to the distributed controls system 30 and acts as a medium for transmission of other signals and data to and from the UAV 12, including command, control, and data for the payload.

In one embodiment, this plurality of sensors comprises (a) a rotational sensor (not shown) coupled to the spool 18, wherein the spool 18 is coupled to the tension control motor 24, (b) at least one force measuring device 40 coupled to the second end 23 of the tether 20, and (c) at least one force measuring device 42 coupled to an at least one friction reduction device (not shown) located at an opening in the ground station 14 from which the tether 20 is deployed. The rotational sensor coupled to the spool 18 may comprise a spring potentiometer or any other sensor known in the art. The at least one force measuring device 40 coupled to the second end 23 of the tether 20 may comprise a multi-axis load cell or any other sensor known in the art. The at least one force measuring device 42 coupled to at least one friction reduction device may comprise a linear variable differential transformer or any other sensor known in the art. The at least one friction reduction device may comprise, for example, a roller or other friction device known in the art.

In one embodiment, the tension control system 28 receives tether tension data from each of the force measuring devices, processes the tether tension data, and transmits a signal to the tension control motor 24 to adjust the tether tension to a preset tension, and wherein the tension control system 28 transmits a signal to the distributed controls system 30 to modify the UAV's flight path to reduce or increase tether tension to a preset tension. Tether tension can be processed as a function of the tension control motor's current. For example, as the current is increased the motor torque increases causing the spool 18 to apply tension to the tether 20. When current is decreased, the spool 18 reduces tension on the tether 20. Based on the data from the tension control system 28, the distributed controls system 30 can modify the UAV's yaw, translational, and pitch control to achieve the proper tension at the second end 23 of the tether 20. Based on the same data, the tension control motor 24 simultaneously adjusts the tension at the first end 22 of the tether 20. By adjusting the tension at both ends 22, 23 of the tether 20, enough slack is maintained in the tether 20 so that the UAV 12 is free to maneuver as commanded, but not so much slack that the tether 20 could get caught on objects such as trees or telephone poles.

In one embodiment, the ground station energy system 16 comprises a ground station motor 44, a pump 46 coupled to the ground station motor 44, an accumulator 48 coupled to the pump 46, a control valve 50 coupled to the accumulator 48 and coupled to the spool 18 at a rotating joint, and wherein the UAV energy system 26 comprises a UAV motor 52. Either a pneumatic or a hydraulic working fluid can be employed with this combination of ground station and UAV energy systems 16, 26. The ground station motor 44 is independently powered by a battery, which is recharged by the ground station energy system 16 during operation. The ground station motor may also receive power from an independent motor or turbine fueled by diesel or from any other power source known in the art. In a hydraulic system, the ground station motor 44 drives a hydraulic pump 46 which is connected to a working fluid reservoir 54. In a pneumatic system, the ground station motor 44 drives an air compressor 46 or pump 46, which has an inlet 56 for ambient air. In both the hydraulic and pneumatic systems, the pump 46 directs the working fluid to an accumulator 48 which ensures there is always working fluid present to meet the demands of the UAV energy system 26. From the accumulator 48, working fluid is driven to a control valve 50 coupled to the distributed vehicle control system 30 which regulates the amount of working fluid that passes through the rotating joint of the spool 18 and then into the tether's supply line 34.

In the hydraulic system, the working fluid is driven through the tether's supply line 34 to the UAV 12 where the supply line 34 is coupled to the UAV's S hydraulic motor 52. In the pneumatic system, the working fluid is driven through the tether's supply line 34 to the UAV 12 where the supply line 34 is coupled to a motor control valve 60. The motor control valve 60 is coupled to the distributed controls system 30 and regulates the amount of working fluid directed to the UAV's air motor 52. There is also an additional power source 90 on the UAV 12 coupled to power actuators and other auxiliary equipment 92, such as control surfaces 94 and payloads. The power source 90 may comprise a small generator attached to the UAV's fan shaft or may comprise a separate motor or generator powered by the working fluid or an additional conductor in the tether 20. After driving the UAV's motor 52 in either system, the working fluid is purged either by being discharged overboard from the UAV 12 or sent back to the ground station 14 via a return line 32 in the tether 20.

In another embodiment, as shown in FIG. 4, the ground station energy system 16 comprises a hydrogen source 62, a compressor 64 coupled to the hydrogen source 62, a pressure regulator 66 coupled to the compressor 64, a ground station fuel cell 68 coupled to a pressure regulator 66, to the tension control motor 24, to a ground station motor 70, to an exhaust 72, and to an air pump 74, a reservoir 76 coupled to the compressor 64, a control valve 78 coupled to the reservoir 76 and coupled to the spool 18 at a rotating joint, and wherein the UAV energy system 26 comprises a UAV fuel cell 80 coupled to an air pump 82, to a fuel control valve 84, to an exhaust 86, and to a UAV electric motor 88. The hydrogen source 62 is independently powered by a battery, which is recharged by the ground station energy system 26 during operation. Alternatively, the hydrogen source 62 may be powered by any other power source known in the art.

The hydrogen source 62 could comprise a pressure vessel, hydrogen generator, or any other source of hydrogen known in the art. Where the hydrogen source 62 is a generator, the hydrogen generator creates hydrogen through the electrolysis of water or through reformation or extraction of another hydrogen-rich chemical. This hydrogen is then directed into a hydrogen compressor 64, which is driven by the ground station motor 70. The hydrogen compressor 64 drives the hydrogen through two channels. The first channel runs to a pressure regulator 66, which controls flow of the fluid, in this case hydrogen fuel, directed to the ground station fuel cell 68. The hydrogen fuel is then mixed in the ground station fuel cell 68 with air supplied by an air pump 82. The fuel cell 68 in turn supplies energy to the air pump 82, the tension control motor 24, and the ground station motor 70. The second channel runs to a reservoir 76, which ensures there is always fuel present to meet the demands of the UAV energy system 26. The reservoir 76 directs the hydrogen fuel to a control valve 78 coupled to the distributed controls system 30 which regulates the amount of fuel that passes through the rotating joint of the spool 18 and then into the tether's supply line 34.

The hydrogen is then driven through the tether's supply line 34 to the UAV 12 where the supply line 34 is coupled to the UAV's fuel control valve 84. The fuel control valve 84 is coupled to the distributed controls system 30 and regulates the flow of hydrogen fuel into the UAV fuel cell 80. The UAV fuel cell 80 mixes the hydrogen fuel with air supplied by an air pump 82. The fuel cell 80 then supplies power to the UAV's electric motor 88 and air pump 82. After the reaction in the fuel cell 80, the hydrogen fuel byproducts of air and water are discharged overboard from the UAV 12. There is also an additional power source 90 on the UAV 12 coupled to power actuators and other auxiliary equipment 92, such as control surfaces 94 and payloads. The power source 90 may comprise a small generator attached to the UAV's fan shaft or could be a separate motor or generator powered by the hydrogen fuel or an additional conductor in the tether 20.

The foregoing embodiments may be combined with any other embodiments or aspects of the invention disclosed herein.

In a second aspect, the present invention provides a method for adjusting tether tension between an unmanned aerial vehicle 12 and a ground station 14 comprising the steps of: (a) measuring tether tension via at least one force measuring device 40 coupled to a second end 23 of a tether 20 located at an unmanned aerial vehicle 12, (b) measuring tether tension via a force measuring device 42 coupled to a friction reduction device located at an opening in a ground station 14 from which the tether 20 is deployed, (c) measuring the length of the tether 20 unwound from a spool 18 via a rotational sensor, (d) measuring the current of a tension control motor 24 coupled to the spool 18, (e) sending data from each measurement to a tension control system 28, (f) processing data from each measurement in the tension control system 28 to determine the proper adjustment for the tether tension, (g) transmitting the proper adjustment data from the tension control system 28 to the tension control motor 24 to adjust the tether tension, (h) adjusting the tether tension by driving the tension control motor 24 to either wind or unwind the tether 20 from the spool 18, (i) transmitting the proper adjustment data from the tension control system 28 to the distributed controls system 30 to modify the unmanned aerial vehicle's flight path to reduce or increase tether tension to a preset tension, and (j) modifying the unmanned aerial vehicle's flight path to reduce or increase tether tension to a preset tension.

As used herein, measuring tether tension via force measuring devices can be accomplished via multi-axis load cells or linear variable differential transformers. Similarly, measuring the length of the unwound tether 20 can be accomplished using an encoder or any other sensor known in the art. These data measurements can be made continuously or at set intervals. Data from these measurements is then sent to the tension control system 28 via the communication cable 38 in the tether 20 or via direct couplings such as wiring from the sensor to the tension control system 28. The tension control system 28 processes this data using a programmed algorithm and calculates the proper adjustment to be made at the spool 18 and at the UAV 12. This adjustment data is then sent to the tension control motor 24 via fiber optics or some other direct communication coupling, which causes the motor 24 to then wind or unwind the tether 20 to adjust the tension at the ground station 14. The adjustment data is also simultaneously sent to the distributed controls system 30 via the communication line in the tether 20. The distributed controls system 30 then manipulates the UAV's yaw, pitch and translational movement to adjust the tension at the UAV 12.

In a third aspect, the present invention provides a method for continuously supplying energy to an unmanned aerial vehicle 12 from a ground station 14 via a tether 20 comprising the steps of: (a) powering a ground station motor 44, 70, (b) driving a ground station energy system 16 via the ground station motor 44, 70, (c) pumping a fluid through from the ground station energy system 16 to a control valve 50, 78, (d) pumping the fluid from the control valve 50, 78 to a rotating joint in a spool 18, wherein a tether 20 is wound about the spool 18, wherein a first end 22 of the tether 20 is coupled to the rotating joint, (e) pumping the fluid through the tether 20 to a UAV 12 that receives a second end 23 of the tether 20, (f) using the fluid to power a UAV energy system 26, and (g) purging the fluid or the fluid's byproducts from the UAV 12. Powering a ground station motor 70 can be done either via a battery, the ground station energy system 16, a generator, or via any other power supply known in the art.

## Claims

1. A tether continuous energy supply system for an unmanned aerial vehicle, the tether continuous energy supply system comprising:
a ground station;
a ground station energy system;
a spool coupled to the ground station energy system at a rotating joint;
a tether that is wound about the spool, wherein a first end of the tether is coupled to the rotating joint;
a tension control motor coupled to both the spool and the ground station energy system;
an unmanned aerial vehicle (UAV) coupled to a second end of the tether;
a UAV energy system;
a fluid that moves throughout the tether continuous energy supply system;
a tension control system that receives and transmits signals from a plurality of sensors contained within the tether continuous energy supply system; and
a distributed controls system that receives and transmits signals from the plurality of sensors contained within the tether continuous energy supply system.

2. The tether continuous energy supply system of claim 1, wherein the ground station energy system comprises a ground station motor, a pump coupled to the ground station motor, an accumulator coupled to the pump, a control valve coupled to the accumulator and coupled to the spool at a rotating joint, and wherein the UAV energy system comprises a UAV motor coupled to the unmanned aerial vehicle.

3. The tether continuous energy supply system of claim 2, wherein the plurality of sensors contained within the tether continuous energy supply system comprises:
a rotational sensor coupled to the spool, wherein the spool is coupled to the tension control motor;
at least one force measuring device coupled to the second end of the tether; and
at least one force measuring device coupled to an at least one friction reduction device located at an opening in the ground station from which the tether is deployed.

4. The tether continuous energy supply system of claim 3, wherein the tension control system receives tether tension data from each of the force measuring devices, processes the tether tension data, and transmits a signal to the tension control motor to adjust the tether tension to a preset tension, and wherein the tension control system transmits a signal to the distributed controls system to modify the unmanned aerial vehicle's flight path to reduce or increase tether tension to a preset tension.

5. The tether continuous energy supply system of claim 1, wherein the tether comprises at least one tensile yarn and at least one supply line.

6. The tether continuous energy supply system of claim 1, wherein the tether comprises at least one communication cable.

7. The tether continuous energy supply system of claim 1, wherein the ground station energy system comprises a hydrogen generator, a compressor coupled to the hydrogen generator, a pressure regulator coupled to the compressor, a ground station fuel cell coupled to a pressure regulator, to the tension control motor, to a ground station motor, to an exhaust, and to an air pump, a reservoir coupled to the compressor, a control valve coupled to the reservoir and coupled to the spool at a rotating joint, and wherein the UAV energy system comprises a UAV fuel cell coupled to an air pump, to a fuel control valve, to an exhaust, and to a UAV electric motor.

8. The tether continuous energy supply system of claim 7, wherein the plurality of sensors contained within the tether continuous energy supply system comprises:
a rotational sensor coupled to the spool, wherein the spool is coupled to the tension control motor;
at least one force measuring device coupled to the second end of the tether;
at least one friction reduction device located at an opening in the ground station from which the tether is deployed; and
at least one force measuring device coupled to at least one of the friction reduction devices.

9. A method for adjusting tether tension between an unmanned aerial vehicle and a ground station, the method comprising:
measuring tether tension via at least one force measuring device coupled to a second end of a tether located at an unmanned aerial vehicle;
measuring tether tension via a force measuring device coupled to a friction reduction device located at an opening in a ground station from which the tether is deployed;
measuring the length of the tether unwound from a spool via a rotational sensor;
measuring the current of a tension control motor coupled to the spool;
sending data from each measurement to a tension control system;
processing data from each measurement in the tension control system to determine the proper adjustment for the tether tension;
transmitting the proper adjustment data from the tension control system to the tension control motor to adjust the tether tension;
adjusting the tether tension by driving the tension control motor to either wind or unwind the tether from the spool;
transmitting the proper adjustment data from the tension control system to the distributed controls system to modify the unmanned aerial vehicle's flight path to reduce or increase tether tension to a preset tension; and
modifying the unmanned aerial vehicle's flight path to reduce or increase tether tension to a preset tension.

10. A method for continuously supplying energy to an unmanned aerial vehicle from a ground station via a tether comprising the steps of:
powering a ground station motor;
driving a ground station energy system via the ground station motor;
pumping a fluid through from the ground station energy system to a control valve;
pumping the fluid from the control valve to a rotating joint in a spool, wherein a tether is wound about the spool, wherein a first end of the tether is coupled to the rotating joint;
pumping the fluid through the tether to an unmanned aerial vehicle that receives a second end of the tether;
using the fluid to power a UAV energy system; and
purging the fluid or the fluid's byproducts from the unmanned aerial vehicle.
